# EUROPÄISCHE PATENTSCHRIFT

(11) **EP 0 543 774 B1**
(45) Veröffentlichungstag und Bekanntmachung des Hinweises auf die Patenterteilung: **14.06.1995**
(21) Anmeldenummer: 92810827.3
(22) Anmeldetag: 27.10.1992
(51) Int. Cl.: B62M 9/16

(54) **Antrieb für schwingarmgelagerte Fahrzeuge und Schlitten**
Drive for swinging arm supported vehicles and sleds
Entraînement pour véhicules et traineaux avec suspension à bras oscillant

(30) Priorität: 12.11.1991 CH 3288/91
(43) Veröffentlichungstag der Anmeldung: 26.05.1993
(73) Patentinhaber: Hauser, Fritz, CH-8165 Oberweningen (CH)
(72) Erfinder: Hauser, Fritz, CH-8165 Oberweningen (CH)

(56) Entgegenhaltungen:
- DE-A- 3 312 297
- FR-A- 2 419 210
- US-A- 3 838 606
- US-A- 4 705 494

## Beschreibung

Die Erfindung betrifft einen Antrieb für schwingarmgelagerte Fahrzeuge und Schlitten mittels Kette oder Zahnriemen.

Das Problem bei gefederten kettengetriebenen Fahrzeugen besteht darin, dass einerseits durch die Beschleunigung und andererseits durch den Kettenzug Kräfte am Antriebsrad entstehen welche über die Schwinge auf das Fahrzeug übertragen werden und sich auf das Fahrverhalten auswirken. Die Kräfte haben Komponenten die in vertikaler Richtung wirken und somit für den Fahrer ein erhöhte Beanspruchung bedeuten insbesondere im konditionszerrenden Rennsport (Motocross). Eine unruhige Führung des Hinterteils des Fahrzeuges ist die Folge. Besonders ist dies festzustellen bei langem Federweg und grossen Bodenwellen wo stark beschleunigt wird (z.B. Motocross).

Aus dem Deutschen Gebrauchsmuster GM 78 35 967 ist eine Umlenkung der Kette bekannt, welche die Kette parallel zur Schwinge führt. Diese Vorrichtung ist auf der Schwinge angebracht. Beidseitig der Schwingenlagerung liegt eine Umlenkung die dem Kettenrollradius des Zahnkranzes am Hinterrad entspricht, sie eliminiert dadurch die vertikale Kraftkomponente die von der Kette aus auf die Schwinge wirkt. Die Vertikalkraft aus der Beschleunigung die abhängig vom Anstellwinkel der Schwinge zur Horizontalen ist bleibt erhalten.

Aus dem US 4.705.494 ist eine rahmenfeste Umlenkung für Motorräder genauer Off-Road-Motorräder bekannt welche unter Einbezug der Höhe des Fahrzeugschwerpunktes eine Formel zur Berechnung einer rahmenfesten Kettenumlenkung definiert, welche die Kettenführung in Zusammenhang mit dem Motormoment kontrolliert. Das Ziel ist es eine konstante Kettenspannung über den gesamten Schwingenbereich zu erreichen sowie die Antriebskräfte auf den Schwingarm zu minimieren. Die optimale Position der Umlenkrollen soll mittels iterativer Berechnungen, für eine mittlere Position und die zwei Extreme der Schwingenfederung ermittelt werden, dabei wird für eine oben liegende Rolle ein negativer Wert eingesetzt.

Der Schwerpunkt ist bei den oft sehr leichten Geländemotorrädern sehr schwierig zu bestimmen. Das Gewicht des Fahrers muss stets mit einbezogen werden. Da dieses stets varierte ist die Schwerpunkthöhe unbestimmt. Die beschriebene Formel ist unpräzise, zudem ist der Aufwand zur Positionsbestimmung der Umlenkrollen erheblich in Anbetracht das kein genaues Ergebnis geliefert wird.

Die Erfindung besteht darin, dass die beiden Kraftkomponenten in vertikaler Richtung die der Kettenzug einerseits, die Beschleunigung andererseits verursachen, sich im wesentlichen aufheben lassen indem sie gegeneinander gerichtet werden. Die Kette wird wie beim US 4.705.494 um eine starr am Fahrzeug befestigte Umlenkung geführt, wobei das kraftübertragende Kettenteil beim Antriebsrad jederzeit den selben Winkel zur Schwinge aufweist wie diese zur Fahrbahn, sowie das Zentrum der Kettenumlenkung im wesentlichen auf einer Parallelen zu Fahrbahn liegt die durch den Schwingendrehpunkt läuft, sowie der Kettenrollradius der Umlenkung den Radius des Antriebsritzel am Rad hat.

Die Definition:
1. Die Kettenumlenkung muss rahmenfest sein. (wie US 4.705.494)
2. Die Kette muss jederzeit den selben Winkel zur Schwinge aufweisen wie diese zur Fahrbahn.
3. Das Zentrum der Kettenumlenkung muss im wesentlichen auf einer Parallelen zur Fahrbahn liegen die durch den Schwingendrehpunkt läuft, sowie der Kettenrollradius der Umlenkung den Radius des Antriebsritzel am Rad haben.

Damit wird erfindungsgemäss erreicht, dass die Beschleunigungs- und Kettenkomponente sich in der Vertikalen im wesentlichen eliminieren und somit die Beschleunigungskraft horizontal gerichtet ist. Soll in Abwandlung der Erfindung die Beschleunigungsrichtung anders als horizontal gerichtet sein, muss der Ort der Kettenumlenkung verschoben werden.

Die beiden vertikalen Kraftkomponenten erzeugen zwei entgegengesetzte Momente um die Achse des Hinterrades. Da beide Momente den selben Ursprung haben, nämlich den motorischen Antrieb des Fahrzeuges, sind sie gleich: Drehmoment der Beschleunigungskomponente = Drehmoment der Kettenkomponente. Das Moment aus der Beschleunigung ergibt sich aus deren Vertikalkomponente und der Schwingenlänge. Das Moment aus der Ketten ergibt sich aus deren Vertikalkomponente und der Distanz zwischen den Zentren des Kettenumlenkpunktes und des Antriebsrades. Das Zentrum der Kettenumlenkung wird folgendermassen bestimmt. Die Kette soll jederzeit den selben Winkel zur Schwinge aufweisen wie diese zur Horizontalen, oder anders ausgedrückt, die Kette soll den zweifachen Winkel zur Horizontalen aufweisen wie die Schwinge zur Horizontalen. Damit wird erreicht, dass die Beschleunigung jederzeit in horizontaler Richtung verläuft. Des weiteren soll das Zentrum des Umlenkpunktes im wesentlichen auf der Parallelen zur Fahrbahn durch das Schwingenlager liegen, damit wird dem Moment aus der Beschleunigungskomponente ein gleiches Moment durch die Kette entgegengesetzt. Durch Verschiebung des Umlenkpunktes kann eine andere Richtung der Beschleunigungskraft erreicht werden. Die Umlenkung kann den selben Radius aufweisen wie das Ritzel am Antriebsrad damit bei jeder Schwingenstellung die erwähnten Eigenschaften erhalten bleiben, wobei kleine Abweichungen im Kettenrollradius vernachlässigbar sind. Weiter ist mit einem Radius bei der Umlenkung ein Fehler vorhanden der sich wohl, bei einem Schingendrehwinkel von +/-15 Grad beträgt er ca. 1%, für Motorräder vernachlässigen lässt.

Die Erfindung wird nachstehend anhand eines in der Zeichnung dargestellten Ausführungsbeispiels näher erläutert. Es zeigen:
- Fig. 1: eine Ansicht eines Motorrades, z.B. ein Motocrossmotorrad, mit erfindungsgemässem Kettenantrieb;
- Fig. 2: ein Prinzipschema des Kettenantriebes am Heck des Motorrades nach;
- Fig. 3: ein Ansicht des Antriebes mit einer Möglichkeit zur praktischen Ausführung der Kettenumlenkung nach Fig. 2;
- Fig. 4: ein Prinzipschema mit Antrieb ohne Umlenkung der Kette.

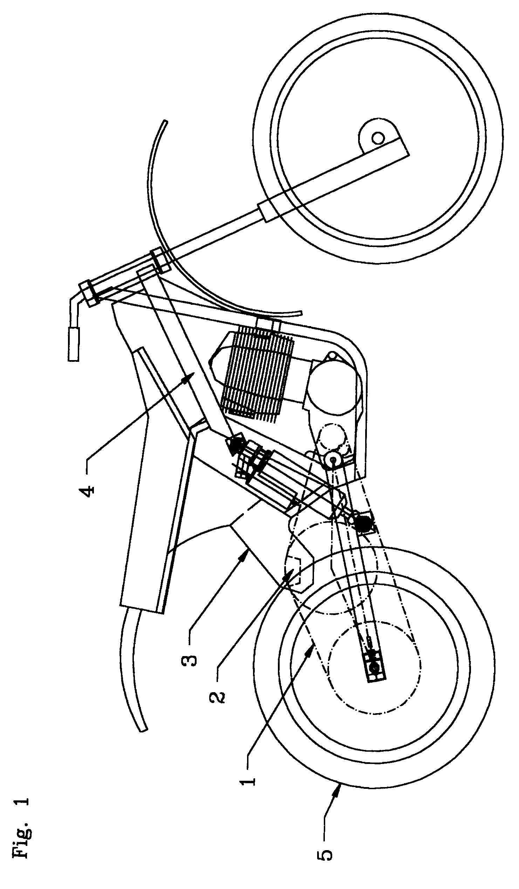

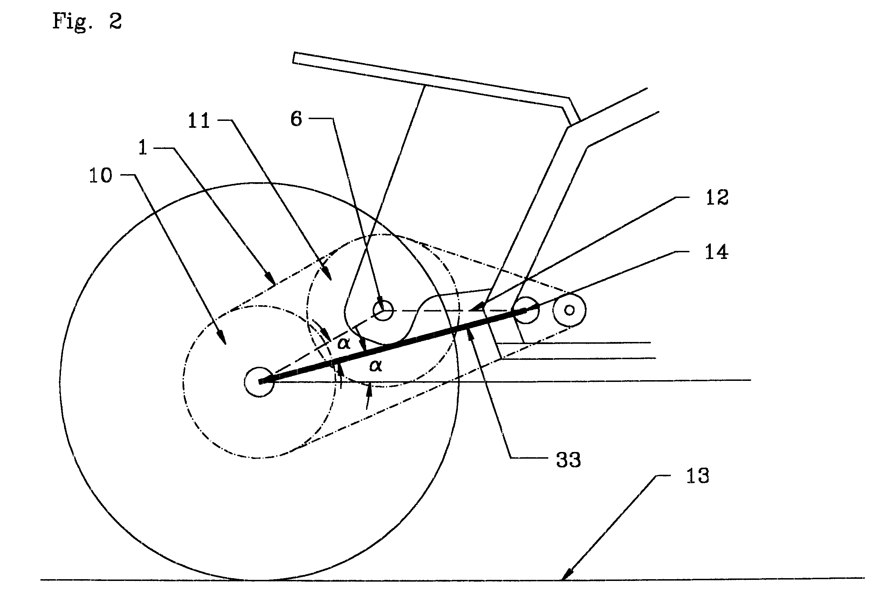

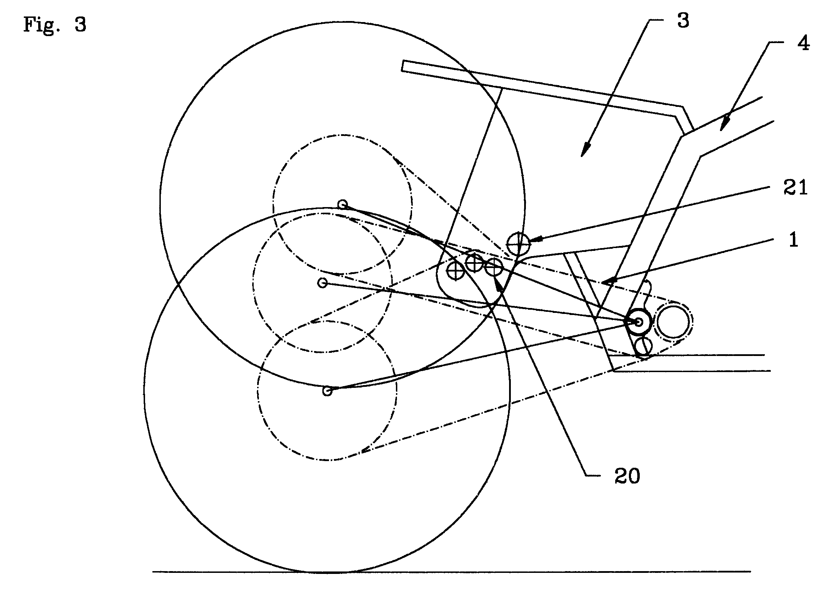

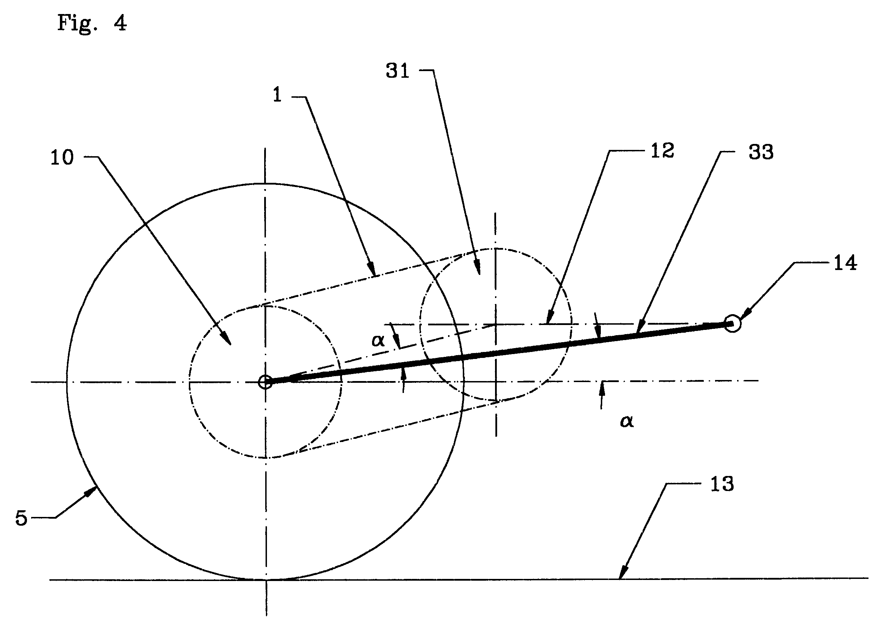

Fig. 1 zeigt ein Motocross-Motorrad, mit dem neu vorgeschlagenen Antrieb. Dabei wird die Kette (1) über die Umlenkung (2) geführt welche über die Halterung (3) am Rahmen (4) des Motorrades starr befestigt ist. Das Kettenritzel (10) in Fig. 2 weist im wesentlichen den selben Radius auf wie die Kettenumlenkung (11). Die Gerade (12) zwischen dem Schwingendrehpunkt (14) und dem Zentrum der Kettenumlenkung (6) soll im wesentlichen parallel zur Fahrbahn (13) sein. Das Beispiel der praktischen Ausführung zeigt Fig. 3. Die Kette (1) wird durch kleine Rollen (20) und (21) umgelenkt, wobei die Anordnung der Rollen (20) und (21) im wesentlichen der vorgeschlagenen Erfindung entspricht. Die Rollen (20) und (21) können auch durch einen Block (2) wie in Fig. 1 als Umlenkung ersetzt werden. Die Rolle (21) in Fig. 3 lenkt die Kette (1) bei starker Einfederung nach unten um die Gesetzmässigkeit, dass das kraftübertragende Kettenteil (1) beim Antriebsrad (5) jederzeit den selben Winkel (α) zur Schwinge (33) aufweist wie diese zur Fahrbahn (13) , sowie das Zentrum der Kettenumlenkung (6) im wesentlichen auf einer Parallelen (12) zur Fahrbahn (13) liegt die durch den Schwingendrehpunkt (14) läuft, sowie der Kettenrollradius der Umlenkung (11) den Radius des Antriebsritzel (10) am Rad (5) hat. Die Halterung (3) für die Umlenkung (11) ist starr mit dem Rahmen (4) verbunden. Fig. 4 zeigt eine Variante in welcher die Kette (1) direkt zum Antriebsritzel (31) führt wobei die Umlenkung durch das Antriebsritzel (31) ersetzt wird, die Schwinge (33) wird in der Länge so vergrössert, dass das Zentrum des kraftübertragende Kettenteils (1) beim Antriebsrad (5) jederzeit den selben Winkel (α) zur Schwinge (33) aufweist wie diese zur Fahrbahn (13) , sowie das Zentrum der Kettenumlenkung (6) im wesentlichen auf einer Parallelen (12) zur Fahrbahn (13) liegt die durch den Schwingendrehpunkt (14) läuft, sowie der Kettenrollradius der Umlenkung (31) den Radius des Antriebsritzel (10) am Rad (5) hat.

## Patentansprüche

1. Antrieb für schwingarmgelagerte Räder (5) von Fahrzeugen (4) und Schlitten mittels Kette (1) oder Zahnriemen indem die Antriebskette (1) über eine definierte am Fahrzeug (4) starr befestigte Umlenkungen (2) geführt ist, derart, dass die Vertikalkomponente der an der Schwinge (33) angreifenden Vortriebskraft durch eine von der Kette (1) ausgehende Kraftkomponente im wesentlichen jederzeit kompensierbar ist, dadurch gekennzeichnet, dass das obere Kettentrum (1) bei Hinterrädern (5) über die Umlenkung geführt ist, wobei das kraftübertragende Kettenteil beim Antriebsrad (5) jederzeit den selben Winkel (α) zur Schwinge (33) aufweist wie diese zur Fahrbahn (13), sowie das Zentrum (6) der Kettenumlenkung im wesentlichen auf einer Parallelen (12) zur Fahrbahn (13) liegt die durch den Schwingendrehpunkt (14) läuft, sowie der Kettenrollradius der Umlenkung (11) den Radius des Antriebsritzel (10) am Rad (5) hat.

2. Antrieb nach Anspruch 1 dadurch gekennzeichnet, dass die Umlenkung (2) von einem oder von mehreren vom Antriebsritzel unabhängigen Kettenführungsmitteln (20) und (21) gebildet wird.

3. Antrieb nach Anspruch 1 und 2, dadurch gekennzeichnet, dass die Umlenkungen (2) als Gleitstück ausgebildet sind.

4. Antrieb nach Anspruch 1 und 2, dadurch gekennzeichnet, dass die Umlenkungen (2) als Räder (20) und (21), insbesondere als Kettenräder ausgebildet sind.

5. Antrieb nach Anspruch 1, dadurch gekennzeichnet, dass das Motorritzel (31) selbst die Umlenkung bildet und so weit vom Schwingendrehpunkt (14) in Richtung Antriebsrad (5) auf einer Parallelen (12) zur Fahrbahn (13) durch den Schwingendrehpunkt (14) liegt so das der kraftübertragende Kettenteil (1) beim Antriebsrad (5) jederzeit den selben Winkel (α) zur Schwinge (33) aufweist wie diese zur Fahrbahn (13), sowie das Motorritzel (31) im wesentlichen den gleichen Kettenrollradius wie das Antriebsritzel (10) am Rad (5) aufweist, derart, dass die Vertikalkomponente der an der Schwinge (33) angreifenden Vortriebskraft durch eine von der Kette (1) ausgehende Kraftkomponente im wesentlichen jederzeit kompensierbar ist.

## Claims

1. Drive for swinging arm supported wheels (5) of vehicles (4) and sleds by means of chain (1) or toothed belt where the drive chain (1) is led over a guides (2) mounted rigidly at the vehicle (4), such that the vertical component of the propulsion force attacking at the swinging arm (33) is compensable substantially at anytime by a force component stemming from the chain (1), characterized in that the upper strand of the chain (1) is guided at rear wheels (5) over the guide, whereby the force transmitting part of the chain exhibits at the driving wheel (5) at all times the same angle (α) to the swinging arm (33) such as same has to the roadway (13), and the center (6) of the chain guide is arranged substantially on a parallel line (12) to the roadway (13) which extends through the point of rotation (14) of the swinging arm, and the chain roller radius of the guide (11) has the radius of the driving pinion (10) at the wheel (5).

2. Drive according to claim 1, characterized in that the guide (2) is formed by one or several of chain guiding means (20) and (21) which are independent from the driving pinion.

3. Drive according to claim 1 or 2, characterized in that the guides (2) are structured as sliding piece.

4. Drive according to claim 1 or 2, characterized in that the guides (2) are structured as wheels (20) and (21), specifically as sprocket wheels.

5. Drive according to claim 1, characterized in that the motor pinion (31) itself forms the guide and is located that far from the point of rotation (14) of the swinging arm in direction driving wheel (5) on a parallel line (12) to roadway (13) through the point of rotation (14) of the swinging arm, that the force transmitting part of the chain (1) at the driving wheel (5) displays at all times the same angle (α) to the swinging arm (33) such as same to the roadway (13), and the motor pinion (31) displays substantially the same chain rolling radius as the driving pinion (10) at the wheel (5), such that the vertical component of the driving force attacking at the swinging arm (33) is compensable substantially at anytime by a force component stemming from the chain (1).

## Revendications

1. Ensemble d'entraînement par chaîne (1) ou courroie crantée pour roues (5) de véhicules (4) ou de traîneau portées par un bras articulé, dans lequel la chaîne motrice (1) est guidée par un dispositif de déviation (2) en position fixe sur le véhicule (4) de façon à ce que la composante verticale de la force motrice agissant sur le bras articulé (33) puisse à tout moment être compensée par une composante de la force exercée par la chaîne (1), caractérisé en ce que pour la roue arrière (5) le brin supérieur de la chaîne (1) est guidé par le dispositif de déviation de manière à ce que la partie de la chaîne transmettant la force d'entraînement à la roue motrice (5) fasse toujours le même angle (α) avec le bras articulé (33) que celui-ci fait avec le sol (13), le centre (6) du dispositif de déviation étant essentiellement situé sur une parallèle (12) au sol (13) passant par le centre de rotation du bras articulé (14), et que le rayon de courbure de la chaîne à l'endroit du dispositif de déviation (11) est le même que celui sur le pignon d'entraînement (10) de la roue (5).

2. Ensemble selon la revendication 1, caractérisé en ce que le dispositif de déviation (2) comprend un ou plusieurs organes de guidage de la chaîne (20) et (21) indépendants du pignon moteur.

3. Ensemble selon une des revendications 1 et 2, caractérisé en ce que les organes de guidage (2) sont des patins.

4. Ensemble selon une des revendications 1 et 2, caractérisé en ce que les organes de guidage (2) sont des roues (20) et (21), en particulier des roues dentées pour chaînes.

5. Ensemble selon la revendication 1, caractérisé en ce que le dispositif de déviation est formé par le pignon moteur (31) lui-même, qu'il est situé sur une parallèle (12) au sol (13) passant par le centre de rotation du bras (14) et suffisamment décalé par rapport à ce centre en direction de la roue motrice (5) pour que la partie de la chaîne (1) transmettant la force d'entraînement à la roue motrice (5) fasse toujours le même angle (α) avec le bras articulé (33) que celui-ci fait avec le sol (13), et que le pignon moteur (31) a essentiellement le même rayon de déroulement de la chaîne que le pignon (10) sur la roue motrice (5) de sorte que la composante verticale de la force motrice agissant sur le bras articulé (33) puisse à tout moment être compensée par une composante de la force exercée par la chaîne (1).
